# EUROPÄISCHE PATENTSCHRIFT

(11) **EP 2 741 453 B1**
(45) Veröffentlichungstag und Bekanntmachung des Hinweises auf die Patenterteilung: **31.01.2018**
(21) Anmeldenummer: 13193178.4
(22) Anmeldetag: 15.11.2013
(51) Int. Cl.: H04L 12/40, H04L 12/28, G05B 19/042, H04L 29/08, G05B 19/00, H04L 29/06

(54) **VERFAHREN ZUM BETREIBEN EINES BUSGERÄTS EINER GEBÄUDEAUTOMATISIERUNGSEINRICHTUNG, SOWIE ENTSPRECHENDES KONFIGURATIONSGERÄT UND ENTSPRECHENDES COMPUTERPROGRAMMPRODUKT**
METHOD FOR OPERATING A BUS DEVICE OF A BUILDING AUTOMATION DEVICE, AND CORRESPONDING CONFIGURATION DEVICE AND COMPUTER PROGRAM PRODUCT
PROCÉDÉ DE FONCTIONNEMENT D'UN APPAREIL BUS D'UN DISPOSITIF D'AUTOMATISATION DU BÂTIMENT, ET APPAREIL DE CONFIGURATION ET PRODUIT PROGRAMME D'ORDINATEUR CORRESPONDANTS

(30) Priorität: 06.12.2012 DE 102012222474
(43) Veröffentlichungstag der Anmeldung: 11.06.2014
(73) Patentinhaber: Siemens Schweiz AG, 8047 Zürich (CH)
(72) Erfinder: Hofmeister, Josef, 93080 Pentling (DE); Schönberger, Thomas, 94315 Straubing (DE)
(74) Vertreter: Maier, Daniel Oliver

(56) Entgegenhaltungen:
- WO-A1-99/31521
- Jean-Philippe Vasseur ET AL: "Interconnecting Smart Objects with IP. The Next Internet", , 15 June 2010 (2010-06-15), pages 1-432, XP055243651, ISBN: 978-0-12-375165-2 Retrieved from the Internet: URL:http://www.portal.inf.ufg.br/~brunoos/ books/Interconnecting%20Smart%20Objects%20 with%20IP.pdf [retrieved on 2016-01-21]

## Beschreibung

Die Erfindung betrifft ein Verfahren zum Betreiben eines Busgeräts für einen Gebäudeinstallationsbus einer Gebäudeautomatisierungseinrichtung. Bei dem Gebäudeinstallationsbus kann es sich beispielsweise um einen Bus gemäß dem Standard KNX oder EIB (Europäischer Installationsbus) handeln. Durch das Verfahren wird von einer Steuereinheit des Busgeräts ein Datensatz aus zusammengehörigen Daten über den Gebäudeinstallationsbus an ein Empfängergerät ausgesendet. Zu der Erfindung gehören auch ein Konfigurationsgerät zum Konfigurieren und Warten von Busgeräten einer Gebäudeinstallationseinrichtung sowie ein Computerprogrammprodukt für ein Busgerät.

Eine Gebäudeinstallationseinrichtung ermöglicht es, einzelne Gebäudeinstallationen, wie beispielsweise eine Lampe oder einen Heizkörper, individuell gemäß einem vorgegebenen Betriebsplan zu steuern, indem an jeder Gebäudeinstallation ein Busgerät bereitgestellt wird, welches die jeweilige Gebäudeinstallation steuert, also beispielsweise automatisch eine Lampe an- und ausschaltet oder einen Thermostat eines Heizkörpers einstellt. Die Busgeräte können dabei untereinander und auch mit einem zentralen Konfigurationsgerät über einen Gebäudeinstallationsbus verbunden sein, so dass die Geräte gegenseitig Daten austauschen können und die Busgeräte zentral über das Konfigurationsgerät konfiguriert oder re-konfiguriert werden können. Die unter den Busgeräten ausgetauschten Daten können beispielsweise Sensordaten oder Steuerdaten sein.

Ein Busgerät weist in der Regel eine zentrale Steuereinheit mit einer Prozessoreinrichtung auf, beispielsweise einem Mikrocontroller. Die Steuereinheit kann Steuerbefehle für die angeschlossene Gebäudeinstallation erzeugen und/oder Sensordaten von der Gebäudeinstallation auswerten. Um der Steuereinheit einen Datenaustausch mit dem Gebäudeinstallationsbus zu ermöglichen, weist das Busgerät in der Regel eine spezielle Anschlussschaltung auf. Hierbei kann es sich beispielsweise um einen integrierten Schaltkreis (IC Integrated Circuit) handeln. Die Anschlussschaltung umfasst auch die elektrischen Anschlüsse zum Anschließen des Busgeräts an den Gebäudeinstallationsbus.

Möchte die Steuereinheit des Busgeräts Daten über den Gebäudeinstallationsbus an ein anderes Gerät aussenden, so kann es diese Daten der Anschlussschaltung zum Aussenden bereitstellen. Das Bereitstellen kann beispielsweise in der Weise erfolgen, dass die Daten durch die Steuereinheit in einem Speicher des Busgeräts gespeichert werden und dann der Anschlussschaltung Daten betreffend die Speicheradressen übertragen werden, wo sich die Daten befinden. Die Anschlussschaltung kann dann selbständig die Daten aus dem Speicher auslesen und über den Gebäudeinstallationsbus an das Empfängergerät übertragen.

Die Anschlussschaltung ist dabei in der Weise ausgestaltet, dass sie beim Aussenden dem jeweiligen Standard des Gebäudeinstallationsbusses gemäß vorgeht. Üblicherweise werden die Daten dabei als Datentelegramme versendet, die eine Datenmenge von wenigen Bytes, z.B. 15 Bytes, umfassen können. Umfassen die insgesamt zu versendenden Daten eine größere Datenmenge, so teilt die Anschlussschaltung die Daten selbständig in mehrere Datentelegramme auf.

Vor dem Versenden eines jeden Datentelegramms prüft die Anschlussschaltung, ob der Bus für das Versenden frei ist, d.h. also gerade kein anderes Busgerät Daten über den Bus versendet. Während des Versendens eines Datentelegramms überwacht die Anschlussschaltung auch, ob es zu einem Übertragungsfehler kommt, weil beispielsweise ein anderes Busgerät die Daten durch versehentliches Erzeugen von Spannungssignalen auf den Bus verfälscht hat oder weil das Empfängergerät ein BUSY-Signal sendet und hierdurch anzeigt, dass es z.B. aufgrund von Überlastung das Datentelegramm nicht gespeichert hat und es somit verlorengegangen ist.

Im Falle einer solchen Fehlübertragung eines Datentelegramms sendet eine Anschlussschaltung in der Regel dasselbe Datentelegramm noch einmal und wiederholt dies so lange, bis die Übertragung des Datentelegramms erfolgreich war oder eine maximal zulässige Anzahl von Übertragungsversuchen erfolglos geblieben ist. Beispielsweise kann die maximale Anzahl auf fünf begrenzt sein. Auf einem Gebäudeinstallationsbus können so also prinzipbedingt beispielsweise bei Überlastung des Empfängers Einzeldatenpakete verloren gehen. Die Wahrscheinlichkeit des Verlusts steigt dabei bei einer Gebäudeautomatisierungseinrichtung mit der Anzahl der an dem Gebäudeinstallationsbus angeschlossenen und aktiven Busteilnehmer, also derjenigen Busteilnehmer, die zu einem gegebenen Zeitpunkt Daten aussenden wollen. Wiederholt hierbei in dem obigen Beispiel jeder Busteilnehmer bei erfolgloser Übertragung jedes seiner Datentelegramme den Übertragungsversuch bis zu fünf Mal, entsteht hierbei das Fünffache an Datenverkehr.

Hat dann eine Anschlussschaltung für einen vorbestimmten Maximalzeitraum oder die maximale Anzahl an Versuchen vergeblich versucht, ein Datentelegramm an ein Empfängergerät zu übertragen, so kann die Anschlussschaltung den Übertragungsversuch vollständig abbrechen und an die Steuereinheit des Busgeräts signalisieren, dass der Gebäudeinstallationsbus zur Zeit nicht für die Übertragung von Daten bereitsteht.

Eine erfolgreiche Übertragung eines Datentelegramms, d.h. die vollständige Übertragung des Datentelegramms an ein Empfängergerät erkennt die Anschlussschaltung dagegen in der Regel daran, dass die Anschlussschaltung ein ACK-Signal (ACK - Acknowledge) von dem Empfängergerät empfängt. Die Anschlussschaltung gibt dann ein entsprechendes Antwortsignal an die Steuereinheit weiter.

Bei einem Gebäudeinstallationsbus kann sich nun die folgende kritische Situation ergeben: Möchte eine Steuereinheit eines Gerätebusses besonders viele zusammengehörige Daten als einen Datensatz verschicken, der im Ganzen an ein Empfängergerät zu übertragen ist, so geschieht dies in der Regel dadurch, dass die Steuereinheit den Datensatz auch als Ganzes der Anschlussschaltung des Busgeräts zum Aussenden bereitstellt und der Anschlussschaltung signalisiert, dass dieser Datensatz über den Gebäudeinstallationsbus auszusenden ist. Die Anschlussschaltung sendet dann die bereitgestellten Daten selbständig als einzelne Datentelegramme in den Gebäudeinstallationsbus aus und erzeugt hierdurch einen verhältnismäßig großen und lang andauernden Datenverkehr auf dem Gebäudeinstallationsbus, d.h. eine hohe Buslast oder Busbelastung. Während dieser Zeit ist es dann besonders wahrscheinlich, dass auch andere Busgeräte irgendwann in diesem Zeitraum ebenfalls Daten aussenden müssen, so dass es zu Störungen bei der Datenübertragung kommt. Dies wiederum bewirkt bei den Anschlussschaltungen einiger Busgeräte, dass sie die erfolglos übertragenen Datentelegramme noch einmal aussenden. Dies verstärkt die Buslast noch einmal. So kann die Übertragung eines verhältnismäßig großen Datensatzes zu einem "Aufschaukeln" der Buslast und zu einer Überschreitung der maximalen Datenrate auf dem Gebäudeinstallationsbus führen und die Anschlussschaltung, welche den erwähnten Datensatz zu übertragen versucht, dazu zu veranlassen, die Übertragung vollständig abzubrechen. Mit anderen Worten schlägt dann die Übertragung des Datensatzes über den Gebäudeinstallationsbus insgesamt fehl. Die Steuereinheit muss dann noch einmal die Übertragung des gesamten Datensatzes anstoßen, d.h. den Datensatz noch einmal der Anschlussschaltung bereitstellen und diese zu einem wiederholten Versuch der Datenübertragung veranlassen.

Die Übertragung von verhältnismäßig großen Datensätzen kommt insbesondere im Zusammenhang mit der Konfiguration von Busgeräten vor. Die hierzu genutzten zentralen Busgeräte müssen zum Konfigurieren eines Busgeräts oftmals einen vollständigen Parametersatz für das Busgerät über den Gebäudeinstallationsbus an dieses Busgerät übertragen. Ein solcher Parametersatz kann über eintausend einzelne Parameterwerte enthalten und verursacht bei der üblichen Datentelegrammgröße von 15 bis 20 Bytes eine verhältnismäßig hohe Buslast. Auch eine Neuinstallation einer Betriebssoftware für ein Busgerät (sogenanntes Firmware-Update) erfordert die Übertragung der in der Regel ähnlich umfangreichen Betriebssoftware.

In der WO 99/31521 A1 ist ein Computernetzwerk beschrieben, bei welchem eine Sendereihenfolge zwischen den Nodes für den Austausch von Nachrichten mittels eines zentralisierten Token-Passing, CTP, geregelt ist. Ein zentraler Server übergibt einen Token, der das Senden einer Nachricht erlaubt, abwechselnd an andere Nodes des Netzwerks. Der zentrale Server ermittelt die sendebereiten Geräte, die den Token benötigen, auf der Grundlage einer "Lineup Card". Der zentrale Server überträgt also nacheinander ein Sendetoken an diejenigen Nodes, die in der Lineup-Card angegeben sind. Dieser Mechanismus wird als "Polling" bezeichnet.

Aus einen wissenschaftlichen Fachbeitrag (Jean-Philippe Vasseur et al., "Interconnecting Smart Objects with IP. The Next Internet", 15. Juni 2010, ISBN: 978-0-12-375165-2) ist bekannt, Gegenstände über eine Ethernet-basierte IP-Verbindung zu verbinden. Das Ethernet-Protokoll sieht hierbei die Kollisionsdetektion CSMA/CD (Carrier Sense Multiple Access / Collision Detection) vor, die bei Detektieren einer Kollision während des Sendens danach beim nächsten Sendevorgang für eine zufällige Zeitverzögerung verzögert.

Der Erfindung liegt die Aufgabe zugrunde, bei einer Gebäudeautomatisierungseinrichtung einen stabilen Betrieb des Gebäudeinstallationsbusses zu gewährleisten.

Die Aufgabe wird durch die Gegenstände der unabhängigen Patentansprüche gelöst. Vorteilhafte Weiterbildungen der Erfindung sind durch die Unteransprüche gegeben.

Durch das erfindungsgemäße Verfahren wird ein Busgerät in der Weise betrieben, dass es bei der Übertragung eines verhältnismäßig großen Datensatzes aus zusammengehörigen Daten nicht zu dem beschriebenen "Aufschaukeln" der Buslast kommt, so dass die Datenübertragung vollständig abgebrochen werden muss.

Gemäß dem Verfahren stellt die Steuereinheit eines Busgeräts den zu übertragenden Datensatz nicht als Ganzes auf einmal der Anschlussschaltung zur Übertragung bereit. Vielmehr wird gemäß dem Verfahren durch die Steuereinheit der Datensatz in mehrere Datenpakete aufgeteilt. Die Datenpakete werden dann nacheinander der Anschlussschaltung zum Aussenden bereitgestellt. Aus Sicht der Anschlussschaltung stellt also jedes einzelne Datenpaket einen unabhängigen Datenblock dar, nach dessen Aussenden die Anschlussschaltung ein Antwortsignal an die Steuereinheit sendet, durch welches die Anschlussschaltung signalisiert, ob das Datenpaket vollständig an das Empfängergerät übertragen werden konnte oder ob es zu einem Übertragungsfehler gekommen ist.

Dies macht sich das erfindungsgemäße Verfahren zunutze: Nach jedem Bereitstellen eines der Datenpakete wird nämlich durch die Steuereinheit das Antwortsignal der Anschlussschaltung abgewartet und erst nach dem Empfangen des Antwortsignals der Anschlussschaltung ein nächstes Datenpaket zum Aussenden bereitgestellt. Die Anschlussschaltung kann also erst weitermachen, wenn das nächste Datenpaket bereitsteht. Dies geschieht dabei nicht unbedingt sofort nach dem Empfangen des Antwortsignals. Das nächste Datenpaket wird unter Umständen erst um eine Verzögerungszeitdauer verzögert bereitgestellt. Die Verzögerungszeitdauer ist dabei in der Steuereinheit einstellbar und wird in Abhängigkeit von dem letzten Antwortsignal eingestellt (dynamische Verzögerung).

Das erfindungsgemäße Verfahren weist den Vorteil auf, dass durch dynamische Verzögerungszeiten während der paketweisen Übertragung eines Datensatzes die Busauslastung auf einen günstigen Wert eingeregelt werden kann und so eine kritische Höhe der Busbelastung nicht erreicht wird oder die Busbelastung wieder unter eine kritische Höhe rückgeführt werden muss.

Das erfindungsgemäße Verfahren sieht hierbei vor, dass die Verzögerungszeitdauer vergrößert wird, falls durch das zuletzt empfangene Antwortsignal signalisiert wird, dass sich beim Aussenden des zuletzt bereitgestellten Datenpakets ein Übertragungsfehler ereignet hat. So wird das beschriebene "Aufschaukeln" der Busbelastung durch wiederholtes Aussenden von Datentelegrammen vermieden. Es hat sich gezeigt, dass so die Übertragung des Datensatzes auch bei hoher Busbelastung letztendlich erfolgreich abgeschlossen werden kann.

Bei dem Verfahren wird die Verzögerungszeitdauer verringert, falls durch das zuletzt empfangene Antwortsignal signalisiert wird, dass das zuletzt bereitgestellte Datenpaket vollständig an das Empfängergerät übertragen wurde. Hierdurch ergibt sich der Vorteil, dass bei geringer Busbelastung oder wenn sogar überhaupt kein weiterer Busteilnehmer Daten über den Bus aussendet, die Übertragung des Datensatzes mit maximaler Datenrate durchgeführt wird, wenn nämlich die Verzögerungszeitdauer letztendlich nach dem Übertragen einiger Pakte auf den Wert Null eingestellt wurde.

Durch die Steuereinheit des Busgeräts können aber anstelle nur des letzten Antwortsignals der Anschlussschaltung auch Antwortsignale zu mehreren Datenpaketen ausgewertet werden. Eine Ausführungsform des Verfahrens sieht vor, dass durch die Steuereinheit in Abhängigkeit von mehreren Antwortsignalen eine Fehlerstatistik zur Häufigkeit der Übertragungsfehler gebildet oder ermittelt wird und die Verzögerungszeitdauer auf der Grundlage dieser Statistik eingestellt wird. Hierdurch ergibt sich der Vorteil, dass sich (nach einigen Datenpaketen) gleichmäßige Zeitabstände zwischen dem Aussenden der einzelnen Datenpakete ergeben.

In vorteilhafter Weise kann auch der Fall berücksichtigt werden, dass die Anschlussschaltung ein Datenpaket zwar erfolgreich überträgt, hierzu aber sehr lange braucht, weil der Bus immer wieder durch andere sendende Busgeräte blockiert ist. Die Antwortzeit gibt somit auch einen Hinweis auf die Busbelastung, selbst wenn die Datenpakete letztendlich erfolgreich übertragen werden. Bei einer entsprechenden Ausführungsform des Verfahrens wird durch die Steuereinheit die jeweilige Verzögerungsdauer zusätzlich in Abhängigkeit von einer Antwortzeit eingestellt, welche zwischen dem Bereitstellen eines Datenpakets und dem Empfangen des zugehörigen Antwortsignals vergangen ist.

Durch das erfindungsgemäße Verfahren ergibt sich ein weiterer Vorteil darin, dass für den Fall, dass bei einer letztendlich erfolglosen Übertragung eines Datenpakets, wenn also die Anschlussschaltung den Sendevorgang vollständig abbricht, die Steuereinheit des Busgeräts nicht noch einmal versuchen muss, den vollständigen Datensatz, also alle Daten, noch einmal zu übertragen. Da in der Steuereinheit bekannt ist, bei welchem Datenpaket der vollständige Sendeabbruch erfolgt ist, kann bei Wiederaufnahme des Übertragungsversuchs bei diesem Datenpaket fortgefahren werden. Entsprechend wird also bevorzugt in Abhängigkeit von dem letzten Antwortsignal als das jeweils nächste Datenpaket im Falle eines Übertragungsfehlers das zuletzt bereitgestellte Datenpaket noch einmal und nur im Falle einer erfolgreichen vollständigen Übertragung des zuletzt bereitgestellten Datenpakets ein anderes Datenpaket zum Aussenden für die Anschlussschaltung bereitgestellt.

Wie bereits ausgeführt, kommt es besonders dann zu einer Überlastung eines Gebäudeinstallationsbusses, wenn große Datensätze übertragen werden, wie etwa ein Parameterdatensatz zum Konfigurieren des Empfängergeräts. Entsprechend wird das erfindungsgemäße Verfahren bevorzugt beim Übertragen eines solchen Parametersatzes angewendet. In diesem Zusammenhang sei hier noch einmal klargestellt, dass die Anschlussschaltung eines sendenden Busgeräts die Antwortsignale nicht unbedingt in Abhängigkeit von einem ACK-Signal erzeugt, die das zu konfigurierende Busgeräts selbst erzeugt. In einem Gebäudeinstallationsbus können auch mehrere Buszweige über beispielsweise einen Linienkoppler miteinander gekoppelt sein. Ein solcher Linienkoppler kann einen Zwischenspeicher aufweisen, in welchem Datentelegramme aus einem Buszweig gespeichert und anschließend in einen anderen Buszweig weitergeleitet werden. Ist ein solcher Linienkoppler überlastet, so wird dieser und nicht das Busgerät, für welches die Daten bestimmt sind, bereits ein BUSY-Signal an die Anschlussschaltung des sendenden Busgeräts senden. In diesem Fall stellt dann der Linienkoppler das Empfängergerät dar und der eigentliche Adressat des Datensatzes ist ein diesem Empfängergerät nachgeschaltetes Busgerät. Mit anderen Worten handelt es sich bei dem Empfängergerät um die Quelle des ACK-Signals bzw. des BUSY-Signals (oder entsprechnder Signale), aus welchen die Anschlussschaltung des sendenden Busgeräts die Antwortsignale für die Steuereinheit erzeugt. Das Anschlussgerät kann das Antwortsignal auch selbst aus sich heraus in Abhängigkeit von einer Zeitüberschreitung erzeugen, wenn das Anschlussgerät z.B. keinen Sendezugriff auf den Gebäudeinstallationsbus für eine vorbestimmte Zeitdauer erhält oder nie ein Signal vom Empfängergerät ankommt.

Ein weiterer bevorzugter Verwendungsfall des erfindungsgemäßen Verfahrens besteht darin, dass der Datensatz eine Betriebssoftware für das Empfängergerät oder eben ein dem Empfängergerät nachgeschaltetes Busgerät umfasst. Hierdurch kann dann in vorteilhafter Weise ein Firmware-Update zuverlässig über den Gebäudeinstallationsbus an ein Busgerät übertragen werden.

Bei den Datenpaketen handelt es sich wegen des Aufteilens logischerweise jeweils um eine Datenmenge, die kleiner als die Datenmenge des Datensatzes selbst ist. Umfasst der Datensatz beispielsweise eine Datenmenge von 10 kB, so kann ein einzelnes Datenpaket beispielsweise 100 Bytes umfassen. Eine Ausführungsform des erfindungsgemäßen Verfahrens sieht vor, dass eine Datenmenge der Datenpakete jeweils gleich oder kleiner einer Nutzdatenmenge eines einzelnen Datentelegramms ist, wie es gemäß dem Standard für den jeweiligen Gebäudeinstallationsbus definiert ist. Mit anderen Worten lässt sich dann jedes Datenpaket in einem einzelnen Datentelegramm versenden. Hierdurch ergibt sich der Vorteil, dass ein einzelnes Datentelegramm ausreicht, um die Verzögerungszeitdauer auf einen günstigeren Wert einzustellen. In diesem Zusammenhang kann auch vorgesehen sein, dass die Steuereinheit zusammen mit der Anschlussschaltung eine Schaltungseinheit bildet, also die Steuereinheit nicht durch einen separaten Prozessor realisiert ist sondern z.B. als Bestandteil eines IC, das auch einen Teil der Anschlussschaltung umfasst. Das Bereitstellen des auszusendenden Datenpakets kann dann z.B. über ein internes Register des ICs erfolgen.

Welche Datenmenge ein einzelnes Datenpaket umfasse sollte, hängt aber zweckmäßigerweise auch von der jeweiligen Architektur des Gebäudeinstallationsbusses und der Anzahl der angeschlossenen Busteilnehmer ab. Durch einfache Versuche kann herausgefunden werden, welche Datenmenge für ein einzelnes Datenpaket bei einer vorliegenden Gebäudeautomatisierungseinrichtung ein günstiges Betriebsverhalten des Gebäudeinstallationsbusses hervorruft.

Wie bereits ausgeführt, kommt es insbesondere beim Übertragen von Parametersätzen und Betriebssoftware im Stand der Technik häufig zu einer Busüberlastung. In diesem Zusammenhang sieht die Erfindung deshalb ein Konfigurationsgerät zum Konfigurieren und Warten von Busgeräten einer Gebäudeautomatisierungseinrichtung vor. Dieses Konfigurationsgerät ist selbst als ein Busteilnehmer des Gebäudeinstallationsbusses ausgestaltet, also als Busgerät. Es ist dazu eingerichtet, eine Ausführungsform des erfindungsgemäßen Verfahrens durchzuführen. Mit diesem Konfigurationsgerät kann dann eine Konfiguration und eine Wartung von Busgeräten durchgeführt werden, ohne dass es hierdurch zu einer Busüberlastung des Gebäudeinstallationsbusses kommt.

Um ein herkömmliches Konfigurationsgerät oder aber auch ein Busgerät zum Steuern einer einzelnen Gebäudeinstallation dahingehend weiterzubilden, dass das Gerät in der Lage ist, einen Datensatz über einen Gebäudeinstallationsbus zu übertragen, ohne hierbei eine Busüberlastung hervorzurufen, umfasst die Erfindung auch ein Computerprogrammprodukt für ein Busgerät. Dieses Computerprogrammprodukt umfasst einen auf zumindest einem Speichermedium gespeicherten Programmcode, welcher dazu ausgelegt ist, bei Ausführung durch eine elektronische Prozessoreinrichtung einer Steuereinheit eines Busgeräts eine Ausführungsform des erfindungsgemäßen Verfahrens durchzuführen. So lässt sich auch in bereits vorhandenen Busgeräten die Durchführung des erfindungsgemäßen Verfahrens ermöglichen.

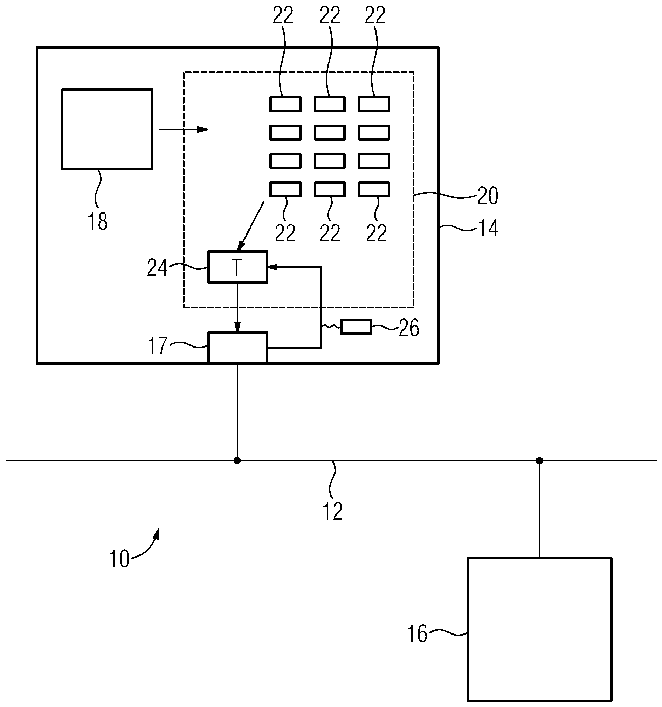

Im Folgenden ist die Erfindung noch einmal genauer anhand eines konkreten Ausführungsbeispiels erläutert. Hierzu zeigt die einzige Figur eine schematische Darstellung eines Ausschnitts aus einer Gebäudeautomatisierungseinrichtung, welche eine bevorzugte Ausführungsform des erfindungsgemäßen Konfigurationsgeräts aufweist. Bei dem im Folgenden erläuterten Ausführungsbeispiel stellen die beschriebenen Komponenten der Ausführungsformen und die beschriebenen Schritte der Verfahren jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Die Figur zeigt eine Gebäudeautomatisierungseinrichtung 10 mit einem Kommunikationsbus 12. Der Kommunikationsbus 12 stellt einen Gebäudeinstallationsbus dar. Der Kommunikationsbus 12 kann beispielsweise nach dem KNX-Standard oder dem EIB-Standard ausgestaltet sein. Bei dem Kommunikationsbus 12 kann es sich beispielsweise um eine Twisted-Pair-Leitung handeln. Eine Übertragungsbandbreite des Kommunikationsbusses 12 kann beispielsweise weniger als 100.000 Bit/s, etwa 9.600 Bit/s, betragen. Eine Nutzdatenmenge von Datentelegrammen, wie sie gemäß dem verwendeten Standard über den Kommunikationsbus 12 zu übertragen sind, kann beispielsweise einen Wert von 15 Bytes bis 20 Bytes betragen.

An den Kommunikationsbus 12 ist ein Konfigurationsgerät 14 angeschlossen, mittels welchem eine (nicht dargestellte) Bedienperson weitere an dem Kommunikationsbus 12 angeschlossene Busgeräte konfigurieren und warten kann. In der Figur ist von den angeschlossenen Busgeräten nur ein einzelnes Busgerät 16 dargestellt. Das Busgerät 16 stellt ein Empfängergerät im Sinne der Erfindung dar. Bei dem Busgerät 16 kann es sich beispielsweise um eine Steuereinrichtung für eine Beleuchtungseinrichtung in einem Gebäude, in welchem die Gebäudeautomatisierungseinrichtung 10 eingebaut ist, oder um ein Steuergerät der Beschattungstechnik, also beispielsweise einer Lamellensteuerung für Fensterlamellen, handeln.

Bei dem Konfigurationsgerät 14 kann es sich beispielsweise um einen Arbeitsplatzcomputer (Personalcomputer - PC) handeln, welcher über eine Anschlussschaltung 17 an dem Kommunikationsbus 12 angeschlossen ist. Die Anschlussschaltung 17 kann beispielsweise eine Einschubkarte sein. Das Konfigurationsgerät 14 stellt damit selbst ein Busgerät der Gebäudeautomatisierungseinrichtung bereit.

Das Konfigurationsgerät 14 kann sich in einem anderen Teil des Gebäudes befinden als das Busgerät 16. Insbesondere können sich die beiden Geräte in unterschiedlichen Räumen befinden. Die Bedienperson hat an dem Konfigurationsgerät 14 einen Parametersatz 18 mittels einer Konfigurationssoftware erstellt. Der Parametersatz 18 soll in dem Busgerät 16 gespeichert werden, damit sich hierdurch eine gewünschte Betriebsweise des Busgeräts 16 ergibt. Der Parametersatz 18 kann sehr viele einzelne Parameterwerte zum Konfigurieren des Busgeräts 16 aufweisen und beispielsweise mehr als eintausend Parameterwerte umfassen. Der Parametersatz 18 kann mittels des Konfigurationsgeräts 14 über den Kommunikationsbus 12 in das Busgerät 16 übertragen werden. Dies kann unabhängig von einer momentanen Auslastung des Kommunikationsbusses 12 erfolgen, ohne dass dies zu einer Busüberlastung des Kommunikationsbusses 12 führt. Dies wird durch eine Steuereinheit 20 des Konfigurationsgeräts 14 ermöglicht. Die Steuereinheit 20 kann beispielsweise durch ein Programm oder ein Programmmodul realisiert sein, welches durch einen Prozessor des Kommunikationsgeräts 14 ausgeführt wird. Durch die Steuereinheit 20 wird der Parametersatz 18 für die Übertragung über den Kommunikationsbus 12 in eine Vielzahl beliebig kleiner, einzelner Datenpakete 22 aufgeteilt, die in der Figur alle durch gleichartige Symbole repräsentiert sind, von denen der Übersicht halber nur einige mit dem Bezugszeichen 22 versehen sind. Die einzelnen Datenpakete 22 werden nacheinander von der Steuereinheit 20 in der folgenden Weise überwacht und über den Kommunikationsbus 12 an das Busgerät 16 ausgesendet. Die Steuereinheit 20 weist eine Verzögerungseinheit 24 auf, welche jeweils eines der Datenpakete 22 auswählen und an die Anschlussschaltung 17 übertragen kann, damit die Anschlussschaltung 17 das ausgewählte Datenpaket 22 in den Kommunikationsbus 12 aussendet. Das Aussenden durch die Anschlussschaltung erfolgt erfindungsgemäß bevorzugt nach einer CSMA/CR-Methode (Carrier Sense Multiple Access/Collision Resolution). Zu jedem Aussendevorgang erzeugt die Anschlussschaltung 17 ein Quittierungs- oder Antwortsignal 26, welches von der Anschlussschaltung 17 an die Steuereinheit 20 übertragen wird. Durch die Verzögerungseinheit 24 wird dann das nächste Datenpaket 22 ausgewählt und zunächst verzögert, bevor das verzögerte Datenpaket 22 an die Anschlussschaltung 17 zum Aussenden übertragen wird. Bei Auftreten eines Übertragungsfehlers, wenn also das gerade ausgesendete Datenpaket auf dem Kommunikationsbus 12 verfälscht wurde oder verloren ging oder wenn eine Bestätigung des Empfangs durch das Busgerät 16 ausbleibt, wird dies durch das Antwortsignal 26 signalisiert. Durch die Verzögerungseinrichtung 24 wird dann eine Verzögerungszeit T eingestellt, um welche sie das nächste Datenpaket zunächst verzögert, bevor sie es an die Anschlussschaltung 17 weitergibt. Bei einem Übertragungsfehler wird hierbei bevorzugt wiederholt dasjenige Datenpaket ausgewählt und gesendet, bei welchem es zu dem Übertragungsfehler kam. Ansonsten wird ein nächstes, bisher noch nicht zum Aussenden bereitgestelltes Datenpaket versendet. Die Verzögerungszeit T wird hierbei dynamisch angepasst, so dass bei häufigem Auftreten von Übertragungsfehlern, also insbesondere fehlerhaften Datenpaketen, die Verzögerungszeit T erhöht wird und bei Empfangen einer Bestätigung einer erfolgreichen, vollständigen Übertragung eines Datenpakets die Verzögerungszeit T verringert wird. Die Verzögerungszeit T kann z. B. einen Wert von 10ms bis 6s aufweisen.

Die Steuereinheit 20 kann auch als integrierter Schaltkreis bereitgestellt sein und dabei beispielsweise auch einen Bestandteil eines integrierten Schaltkreises bilden, welcher auch die Anschlussschaltung selbst umfasst. Hierdurch ergibt sich der Vorteil, dass mit einem einzigen Bauteil die beschriebenen dynamischen Verzögerungszeiten und die Logik einer Anschlussschaltung bereitgestellt werden können und hierbei die Betriebssoftware von Busgeräten bzw. eines Konfigurationsgeräts nicht in gesonderter Weise angepasst werden muss. Das Busgerät bzw. das Konfigurationsgerät können dann den gesamten Parametersatz 18 als Ganzes an diese Schaltung übergeben, welche dann selbständig die Aufteilung in Datenpakete vornimmt und die dynamischen Verzögerungszeiten beim Versenden der einzelnen Datenpakete einstellt.

## Patentansprüche

1. Verfahren zum Betreiben eines Busgeräts (14) einer Gebäudeautomatisierungseinrichtung (10), wobei von einer Steuereinheit (20) des Busgeräts (14) ein Datensatz (18) aus zusammengehörigen Daten über einen Gebäudeinstallationsbus (12) an ein Empfängergerät (16) ausgesendet wird und hierzu der Datensatz (18) durch die Steuereinheit (20) einer Anschlussschaltung (17) des Busgeräts (14) bereitgestellt wird, über welche das Busgerät (14) an den Gebäudeinstallationsbus (12) angeschlossen ist und durch welche bereitgestellte Daten selbständig als Datentelegramme in den Gebäudeinstallationsbus (12) ausgesendet werden, wobei durch die Steuereinheit (20) der Datensatz (18) in mehrere Datenpakete (22) aufgeteilt wird und die Datenpakete (22) nacheinander der Anschlussschaltung (17) zum Aussenden bereitgestellt werden und nach jedem Bereitstellen eines der Datenpakete (22) ein zugehöriges Antwortsignal (26) der Anschlussschaltung (17) abgewartet wird, wobei das nächste Datenpaket (22) nach dem Empfangen des letzten Antwortsignals (26) erst um eine einstellbare Verzögerungszeitdauer (T) verzögert bereitgestellt wird, wobei die Verzögerungszeitdauer (T) in Abhängigkeit von zumindest einem empfangenen Antwortsignal (26) eingestellt wird, so dass sich eine dynamische Verzögerung ergibt,
**dadurch gekennzeichnet, dass**
die Verzögerungszeitdauer (T) vergrößert wird, falls durch das zuletzt empfangene Antwortsignal (26) signalisiert wird, dass sich beim Aussenden des zuletzt bereitgestellten Datenpakets (22) ein Übertragungsfehler ereignet hat, und die Verzögerungszeitdauer (T) verringert wird, falls durch das zuletzt empfangene Antwortsignal (26) signalisiert wird, dass das zuletzt bereitgestellte Datenpaket (22) vollständig an das Empfängergerät (16) übertragen wurde.

2. Verfahren nach Anspruch 1, wobei durch die Steuereinheit (20) in Abhängigkeit von mehreren Antwortsignalen (26) eine Fehlerstatistik zur Häufigkeit der Übertragungsfehler gebildet wird und die Verzögerungszeitdauer (T) auf der Grundlage der Statistik eingestellt wird.

3. Verfahren nach einem der vorhergehenden Ansprüche, wobei durch die Steuereinheit (20) die jeweilige Verzögerungszeitdauer (T) zusätzlich in Abhängigkeit von einer Antwortzeit eingestellt wird, welche zwischen dem letzten Bereitstellen und dem Empfangen des zugehörigen Antwortsignals (26) vergangen ist.

4. Verfahren nach einem der vorhergehenden Ansprüche, wobei in Abhängigkeit von dem letzten Antwortsignal (26) als das jeweils nächste Datenpaket (22) im Falle eines Übertragungsfehlers das zuletzt bereitgestellte Datenpaket (22) noch einmal und im Falle einer vollständigen Übertragung ein anderes Datenpaket (22) zum Aussenden bereitgestellt wird.

5. Verfahren nach einem der vorhergehenden Ansprüche, wobei der Datensatz (18) einen Parameterdatensatz zum Konfigurieren des Empfängergeräts (16) oder eines dem Empfängergerät (16) nachgeschalteten Busgeräts umfasst.

6. Verfahren nach einem der vorhergehenden Ansprüche, wobei der Datensatz (18) eine Betriebssoftware für das Empfängergerät (16) oder ein dem Empfängergerät nachgeschaltetes Busgerät umfasst.

7. Verfahren nach einem der vorhergehenden Ansprüche, wobei eine Datenmenge der Datenpakete (22) jeweils gleich oder kleiner einer Nutzdatenmenge eines Datentelegramms ist.

8. Konfigurationsgerät (14) zum Konfigurieren und Warten von Busgeräten (16) einer Gebäudeautomatisierungseinrichtung (10), welches selbst als Busteilnehmer eines Gebäudeinstallationsbusses (12) der Gebäudeautomatisierungseinrichtung (10) ausgestaltet ist und dazu eingerichtet ist, ein Verfahren nach einem der vorhergehenden Ansprüche durchzuführen.

9. Computerprogrammprodukt für ein Busgerät (14, 16), umfassend einen auf zumindest einem Speichermedium gespeicherten Programmcode, welcher dazu ausgelegt ist, bei Ausführung durch eine elektronische Prozessoreinrichtung eines Busgeräts (14, 16) ein Verfahren nach einem der Ansprüche 1 bis 7 durchzuführen.

## Claims

1. Method for operating a bus device (14) of a building automation facility (10), wherein a data record (18) composed of associated data about a building installation bus (12) is transmitted by a control unit (20) of the bus device (14) to a receiver device (16) and to this end the data record (18) is provided by the control unit (20) of a connection circuit (17) of the bus device (14), by way of which the bus device (14) is connected to the building installation bus (12) and by means of which provided data is automatically transmitted as data telegrams into the building installation bus (12), wherein the control unit (20) divides the data record (18) into a number of data packets (22) and the data packets (22) are provided consecutively to the connection circuit (17) for transmission purposes and after each one of the data packets (22) is provided an associated response signal (26) from the connection circuit (17) is awaited, wherein the next data packet (22) is only provided with a delay of an adjustable delay duration (T) after having received the last response signal (26), wherein the delay duration (T) is adjusted as a function of at least one received response signal (26), so that a dynamic delay is provided,
**characterised in that**
the delay duration (T) is increased if the last response signal (26) received indicates that a transfer error occurred while transmitting the last data packet (22) provided, and the delay duration (T) is reduced if the last response signal (26) received indicates that the last data packet (22) provided was transferred in its entirety to the receiver device (16).

2. Method according to claim 1, wherein an error statistic relating to the frequency of the transfer errors is formed by the control device (20) as a function of a number of response signals (26) and the delay duration (T) is adjusted on the basis of the statistic.

3. Method according to one of the preceding claims, wherein the control unit (20) additionally adjusts the respective delay duration (T) as a function of a response time which has elapsed between the last provision and the receipt of the associated response signal (26).

4. Method according to one of the preceding claims, wherein as a function of the last response signal (26) the last data packet (22) provided is provided again as the respective next data packet (22) in the event of a transfer error, and in the event of a complete transfer, another data packet (22) is provided for transmission.

5. Method according to one of the preceding claims, wherein the data record (18) comprises a parameter data record for configuring the receiver device (16) or a bus device arranged downstream of the receiver device (16).

6. Method according to one of the preceding claims, wherein the data record (18) comprises operating software for the receiver device (16) or a bus device arranged downstream of the receiver device.

7. Method according to one of the preceding claims, wherein a data quantity of the data packets (22) is equal to or smaller than a payload data quantity of a data telegram in each case.

8. Configuration device (14) for configuring and maintaining bus devices (16) of a building automation facility (10), which is itself configured as a bus subscriber of a building installation bus (12) of the building automation facility (10) and is set up to carry out a method according to one of the preceding claims.

9. Computer program product for a bus device (14, 16), comprising program code stored on at least one storage medium, which is designed to carry out a method according to one of claims 1 to 7 upon execution by an electronic processor facility of a bus device (14, 16).

## Revendications

1. Procédé de fonctionnement d'un appareil bus (14) d'un dispositif d'automatisation de bâtiment (10), une unité de commande (20) de l'appareil bus (14) envoyant un jeu de données (18) composé de données connexes sur un bus d'installation de bâtiment (12) à un appareil récepteur (16) et, à cet effet, le jeu de données (18) étant fourni par l'unité de commande (20) d'un circuit de raccordement (17) de l'appareil bus (14) via lequel l'appareil bus (14) est raccordé au bus d'installation de bâtiment (12) et par lequel des données fournies sont émises automatiquement en tant que télégrammes de données dans le bus d'installation de bâtiment (12), l'unité de commande (20) répartissant le jeu de données (18) en plusieurs paquets de données (22) et les paquets de données (22) étant fournis successivement au circuit de raccordement (17) pour être émis et, après chaque fourniture de l'un des paquets de données (22), un signal de réponse associé (26) du circuit de raccordement (17) étant attendu, le paquet de données suivant (22) n'étant, après la réception du dernier signal de réponse (26), fourni qu'avec un retard d'une durée de temps de retard réglable (T), la durée de temps de retard (T) étant réglée en fonction d'au moins un signal de réponse reçu (26), de sorte qu'on obtient un retard dynamique, **caractérisé en ce que** la durée de temps de retard (T) augmente si le signal de réponse reçu en dernier lieu (26) signale que, lors de l'émission du paquet de données fourni en dernier lieu (22), une erreur de transmission s'est produite, et **en ce que** la durée de temps de retard (T) se réduit si le signal de réponse reçu en dernier lieu (26) signale que le paquet de données fourni en dernier lieu (22) a été entièrement transmis à l'appareil récepteur (16).

2. Procédé selon la revendication 1, l'unité de commande (20) formant, en fonction de plusieurs signaux de réponse (26), une statistique d'erreurs sur la fréquence des erreurs de transmission et la durée de temps de retard (T) étant réglée sur base de la statistique.

3. Procédé selon l'une des revendications précédentes, l'unité de commande (20) réglant la durée de temps de retard (T) additionnellement en fonction d'un temps de réponse qui s'est écoulé entre la dernière fourniture et la réception du signal de réponse associé (26).

4. Procédé selon l'une des revendications précédentes, en fonction du dernier signal de réponse (26) étant fourni pour être émis, en tant que paquet de données respectivement suivant (22), encore une fois le paquet de données fourni en dernier lieu (22) en cas d'erreur de transmission et un autre paquet de données (22) en cas de transmission complète.

5. Procédé selon l'une des revendications précédentes, le jeu de données (18) comprenant un jeu de données paramétriques pour configurer l'appareil récepteur (16) ou un appareil bus monté en aval de l'appareil récepteur (16).

6. Procédé selon l'une des revendications précédentes, le jeu de données (18) comprenant un logiciel d'exploitation pour l'appareil récepteur (16) ou un appareil bus monté en aval de l'appareil récepteur.

7. Procédé selon l'une des revendications précédentes, une quantité de données des paquets de données (22) étant respectivement égale ou inférieure à une quantité de données utiles d'un télégramme de données.

8. Appareil de configuration (14) pour la configuration et la maintenance d'appareils bus (16) d'un dispositif d'automatisation de bâtiment (10), lequel est lui-même conçu en tant qu'utilisateur de bus d'un bus d'installation de bâtiment (12) du dispositif d'automatisation de bâtiment (10) et est configuré pour exécuter un procédé selon l'une des revendications précédentes.

9. Produit de programme informatique pour un appareil bus (14, 16), comprenant un code de programme stocké sur au moins un moyen de mémoire et conçu pour exécuter un procédé selon l'une des revendications 1 à 7 en cas d'exécution par un dispositif de processeur électronique d'un appareil bus (14, 16).
